# EUROPEAN PATENT APPLICATION

(11) **EP 4 247 059 A1**
(43) Date of publication of application: **20.09.2023**
(21) Application number: 21894007.0
(22) Date of filing: 19.11.2021
(51) Int. Cl.: H04W 36/08, H04W 48/20

(54) **METHOD, SYSTEM, AND APPARATUS FOR TERMINAL SCANNING, ELECTRONIC DEVICE, AND STORAGE MEDIUM**

(30) Priority: 23.11.2020 CN 202011323169
(71) Applicant: Huawei Technologies Co., Ltd., Shenzhen, Guangdong 518129 (CN)
(72) Inventor: DING, Lv, Shenzhen, Guangdong 518129 (CN); LI, Dakun, Shenzhen, Guangdong 518129 (CN); TAO, Liang, Shenzhen, Guangdong 518129 (CN)
(74) Representative: Huawei European IPR
(86) International application number: PCT/CN2021/131691
(87) International publication number: WO 2022/105860

(57) **Abstract**

This application relates to the field of communication technologies or the field of artificial intelligence, and discloses a terminal scanning method, system, and apparatus, an electronic device, and a storage medium. In the method, an AP determines, based on communication feature information of a terminal that accesses the AP, whether a neighboring AP needs to scan the terminal; and if yes, the AP notifies the neighboring AP to scan the terminal. This reduces a quantity of times that the neighboring AP scans the terminal, and reduces calculation overheads of the neighboring AP.

## Description

This application claims priority to Chinese Patent Application No. 202011323169.2, filed on November 23, 2020 and entitled "TERMINAL SCANNING METHOD, SYSTEM, AND APPARATUS, ELECTRONIC DEVICE, AND STORAGE MEDIUM", which is incorporated herein by reference in its entirety.

### TECHNICAL FIELD

This application relates to the field of communication technologies or the field of artificial intelligence technologies, and in particular, to a terminal scanning method, system, and apparatus, an electronic device, and a storage medium.

### BACKGROUND

In a wireless local area network (wireless local area network, WLAN), to ensure a signal strength of a radio signal received by a terminal in a motion state, an associated access point (access point, AP) of the terminal may guide the terminal to roam from the associated AP to a neighboring AP, where the associated AP of the terminal is an AP accessed by the terminal.

To obtain an optimal roaming guidance occasion, the associated AP sends a message to the neighboring AP in real time, to trigger the neighboring AP to perform collaborative scanning on all terminals that access the associated AP, so that the associated AP determines, based on a collaborative scanning result, the optimal roaming guidance occasion for guiding each terminal to roam.

Because the neighboring AP needs to perform, in real time, collaborative scanning on all the terminals that access the associated AP, calculation overheads of the neighboring AP increase.

### SUMMARY

This application provides a terminal scanning method, system, and apparatus, an electronic device, and a storage medium, to reduce calculation overheads of an AP. The technical solution is as follows.

According to a first aspect, a terminal scanning method is provided, performed by a first AP, where the method includes:
obtaining a communication feature of a to-be-scanned terminal; and sending a scan request to a second AP if the communication feature meets a scan trigger condition, where
the to-be-scanned terminal is a terminal that accesses the first AP, the communication feature indicates a communication status between the to-be-scanned terminal and the first AP, the second AP is a neighboring AP of the first AP, and the scan request indicates the second AP to scan the to-be-scanned terminal.

In the method, an AP determines, based on communication feature information of a terminal that accesses the AP, whether a neighboring AP needs to scan the terminal, and if yes, the AP notifies the neighboring AP to scan the terminal. This reduces a quantity of times that the neighboring AP scans the terminal, and reduces calculation overheads of the neighboring AP.

In a possible implementation, the communication feature includes at least one of a signal strength feature, a traffic feature, and a motion feature of the to-be-scanned terminal, the traffic feature indicates a traffic transmission rate between the first AP and the to-be-scanned terminal, and the motion feature indicates whether the to-be-scanned terminal is moving away from the first AP.

In a possible implementation, the scan trigger condition includes at least one of the following:
a feature value of the signal strength feature is less than a signal strength threshold;
a feature value of the traffic feature is greater than a traffic transmission rate threshold; or
the motion feature indicates that the to-be-scanned terminal is moving away from the first AP.

In a possible implementation, the communication feature includes a motion feature of the to-be-scanned terminal, and the motion feature indicates whether the to-be-scanned terminal is moving away from the first AP; and
the obtaining a communication feature of a to-be-scanned terminal includes:
determining the motion feature based on a first time sequence of the to-be-scanned terminal, where the first time sequence includes network environment statuses of the to-be-scanned terminal at a plurality of time points, and the network environment status indicates a network environment that is of the to-be-scanned terminal and that corresponds to the first AP.

In a possible implementation, the determining the motion feature based on a first time sequence of the to-be-scanned terminal includes:
inputting the first time sequence into a motion model, and outputting the motion feature by using the motion model based on the input first time sequence.

In a possible implementation, the network environment status includes a network status of the to-be-scanned terminal.

In a possible implementation, the network environment status further includes a working status of the first AP.

In a possible implementation, the network status includes at least one of a signal strength between the to-be-scanned terminal and the first AP and a radio frequency band used by the to-be-scanned terminal.

In a possible implementation, the working status includes at least one of a channel identifier, a channel bandwidth, channel utilization, a quantity of accessing terminals, and transmit power of the first AP.

In a possible implementation, before the inputting the first time sequence into a motion model, the method further includes:
receiving the motion model from a control node.

In a possible implementation, before the receiving the motion model from a control node, the method further includes:
sending a second time sequence of at least one terminal to the control node, where the second time sequence of the at least one terminal is used to obtain the motion model through training, a second time sequence of one terminal includes network environment statuses of the terminal at a plurality of time points, and the network environment status indicates a network environment that is of the terminal and that corresponds to the first AP.

In a possible implementation, the to-be-scanned terminal and the at least one terminal meet at least one of the following:
a terminal type of the to-be-scanned terminal is the same as a terminal type of the at least one terminal;
the radio frequency band used by the to-be-scanned terminal is the same as a radio frequency band used by the at least one terminal; and
a signal strength measurement mode supported by the to-be-scanned terminal is the same as a signal strength measurement mode supported by the at least one terminal.

In a possible implementation, the to-be-scanned terminal supports downlink signal quality measurement and roaming guidance.

According to a second aspect, a terminal scanning method is provided, performed by a control node, where the method includes:
obtaining a sample of at least one terminal; and performing model training based on the sample of the at least one terminal, to obtain a motion model, where
one sample of one terminal includes a third time sequence of the terminal and a label of the third time sequence, the third time sequence includes network environment statuses of the terminal at a plurality of time points, the network environment status indicates a network environment that is of the terminal and that corresponds to an AP accessed by the terminal, the label indicates a motion feature of the terminal reflected in the third time sequence, and the motion model is used to output a motion feature of a to-be-scanned terminal, to determine whether to scan the to-be-scanned terminal.

In a possible implementation, the obtaining a sample of at least one terminal includes:
for any terminal in the at least one terminal, obtaining at least one second time sequence of the terminal, where one second time sequence includes network environment statuses of the terminal at a plurality of time points, and the network environment statuses in the second time sequence correspond to a same AP; and
for any second time sequence in the at least one second time sequence, obtaining a sample of the terminal based on the second time sequence.

In a possible implementation, the obtaining a sample of the terminal based on the second time sequence includes:
obtaining at least one third time sequence of the terminal based on the second time sequence, where the at least one third time sequence belongs to the second time sequence; and
determining a label of the third time sequence for any third time sequence in the at least one third time sequence.

In a possible implementation, the obtaining at least one third time sequence of the terminal based on the second time sequence includes:
for any period of time sequence in the any second time sequence, determining the any period of time sequence as one third time sequence if duration of the period of time sequence is greater than first duration, and a signal strength fluctuation value of the period of time sequence is less than a first fluctuation threshold, where the signal strength fluctuation value indicates a fluctuation status that is of a signal strength between the terminal and an AP accessed by the terminal and that is in a time period corresponding to the period of time sequence; and
dividing the period of time sequence into a plurality of third time sequences of the terminal if the duration is less than second duration and the signal strength fluctuation value is greater than a second fluctuation threshold.

In a possible implementation, the determining a label of the third time sequence includes:
if duration of the third time sequence is greater than the first duration, and a signal strength fluctuation value of the third time sequence is less than the first fluctuation threshold, determining the label of the third time sequence as a non-receding label, where the non-receding label indicates that the terminal is not moving away from the accessed AP, and the signal strength fluctuation value indicates a fluctuation status that is of a signal strength between the terminal and the AP accessed by the terminal and that is in a time period corresponding to the third time sequence.

In a possible implementation, the network environment status includes a signal strength between the terminal and an AP accessed by the terminal; and
the determining a label of the third time sequence includes:
if the third time sequence is a partial time sequence in the period of time sequence, determining the label of the third time sequence based on a target network environment status in the period of time sequence, where the target network environment status is a network environment status to which a maximum signal strength in the period of time sequence belongs.

In a possible implementation, the determining the label of the third time sequence based on a target network environment status in the period of time sequence includes:
determining the label of the third time sequence as a non-receding label if the third time sequence in the period of time sequence is located before the target network environment status, where the non-receding label indicates that the terminal is not moving away from the accessed AP; or
determining the label of the third time sequence as a receding label if the third time sequence in the period of time sequence is located after the target network environment status, where the non-receding label indicates that the terminal is moving away from the accessed AP.

In a possible implementation, the determining the label of the third time sequence based on a target network environment status in the period of time sequence includes:
determining the label of the third time sequence as the non-receding label or the receding label if the target network environment status is located in the third time sequence.

In a possible implementation, the obtaining at least one second time sequence of the terminal includes:
receiving, from any AP accessed by the terminal, one second time sequence of the terminal collected by the AP

In a possible implementation, the to-be-scanned terminal and the at least one terminal meet at least one of the following:
a terminal type of the to-be-scanned terminal is the same as a terminal type of the at least one terminal;
the radio frequency band used by the to-be-scanned terminal is the same as a radio frequency band used by the at least one terminal; and
a signal strength measurement mode supported by the to-be-scanned terminal is the same as a signal strength measurement mode supported by the at least one terminal.

In a possible implementation, after the obtaining a motion model, the method further includes:
sending the motion model to at least one AP.

According to a third aspect, a terminal scanning system is provided, where the system may include a plurality of APs, and a first AP in the plurality of APs is configured to perform an operation performed by the terminal scanning method provided in the first aspect or any possible implementation in the first aspect.

In a possible implementation, the system further includes a control node, and the control node is configured to perform an operation performed by the terminal scanning method provided in the second aspect or any possible implementation in the second aspect.

According to a fourth aspect, a terminal scanning apparatus is provided, where the apparatus is configured as a first AP, and the apparatus includes:
an obtaining module, configured to obtain a communication feature of a to-be-scanned terminal, where the to-be-scanned terminal is a terminal that accesses the first AP, and the communication feature indicates a communication status between the to-be-scanned terminal and the first AP; and
a sending module, configured to send a scan request to a second AP if the communication feature meets a scan trigger condition, where the second AP is a neighboring AP of the first AP, and the scan request indicates the second AP to scan the to-be-scanned terminal.

In a possible implementation, the communication feature includes at least one of a signal strength feature, a traffic feature, and a motion feature of the to-be-scanned terminal, the traffic feature indicates a traffic transmission rate between the first AP and the to-be-scanned terminal, and the motion feature indicates whether the to-be-scanned terminal is moving away from the first AP.

In a possible implementation, the scan trigger condition includes at least one of the following:
a feature value of the signal strength feature is less than a signal strength threshold;
a feature value of the traffic feature is greater than a traffic transmission rate threshold; and
the motion feature indicates that the to-be-scanned terminal is moving away from the first AP.

In a possible implementation, the communication feature includes a motion feature of the to-be-scanned terminal, and the motion feature indicates whether the to-be-scanned terminal is moving away from the first AP; and
the obtaining module includes:
a determining unit, configured to determine the motion feature based on a first time sequence of the to-be-scanned terminal, where the first time sequence includes network environment statuses of the to-be-scanned terminal at a plurality of time points, and the network environment status indicates a network environment that is of the to-be-scanned terminal and that corresponds to the first AP.

In a possible implementation, the determining unit is configured to:
input the first time sequence into a motion model, and output the motion feature by using the motion model based on the input first time sequence.

In a possible implementation, the network environment status includes a network status of the to-be-scanned terminal.

In a possible implementation, the network environment status further includes a working status of the first AP.

In a possible implementation, the network status includes at least one of a signal strength between the to-be-scanned terminal and the first AP and a radio frequency band used by the to-be-scanned terminal.

In a possible implementation, the working status includes at least one of a channel identifier, a channel bandwidth, channel utilization, a quantity of accessing terminals, and transmit power of the first AP.

In a possible implementation, the apparatus further includes:
a receiving module, configured to receive the motion model from a control node.

In a possible implementation, the sending module is further configured to:
send a second time sequence of at least one terminal to the control node, where the second time sequence of the at least one terminal is used to obtain the motion model through training, a second time sequence of one terminal includes network environment statuses of the terminal at a plurality of time points, and the network environment status indicates a network environment that is of the terminal and that corresponds to the first AP.

In a possible implementation, the to-be-scanned terminal and the at least one terminal meet at least one of the following:
a terminal type of the to-be-scanned terminal is the same as a terminal type of the at least one terminal;
the radio frequency band used by the to-be-scanned terminal is the same as a radio frequency band used by the at least one terminal; and
a signal strength measurement mode supported by the to-be-scanned terminal is the same as a signal strength measurement mode supported by the at least one terminal.

In a possible implementation, the to-be-scanned terminal supports downlink signal quality measurement and roaming guidance.

According to a fifth aspect, a terminal scanning apparatus is provided, where the apparatus is configured as a control node, and the apparatus includes:
an obtaining module, configured to obtain a sample of at least one terminal, where one sample of one terminal includes a third time sequence of the terminal and a label of the third time sequence, the third time sequence includes network environment statuses of the terminal at a plurality of time points, the network environment status indicates a network environment that is of the terminal and that corresponds to an AP accessed by the terminal, and the label indicates a motion feature of the terminal reflected in the third time sequence; and
a training module, configured to perform model training based on the sample of the at least one terminal, to obtain a motion model, where the motion model is used to output a motion feature of a to-be-scanned terminal, to determine whether to scan the to-be-scanned terminal.

In a possible implementation, the obtaining module is configured to:
for any terminal in the at least one terminal, obtain at least one second time sequence of the terminal, where one second time sequence includes network environment statuses of the terminal at a plurality of time points, and the network environment statuses in the second time sequence correspond to a same AP; and
for any second time sequence in the at least one second time sequence, obtain a sample of the terminal based on the second time sequence.

In a possible implementation, the obtaining module includes:
a first obtaining unit, configured to obtain, for any terminal in the at least one terminal, at least one second time sequence of the terminal, where one second time sequence includes network environment statuses of the terminal at a plurality of time points, and the network environment statuses in the second time sequence correspond to a same AP; and
a second obtaining unit, configured to obtain, for any second time sequence in the at least one second time sequence, a sample of the terminal based on the second time sequence.

In a possible implementation, the second obtaining unit includes:
an obtaining subunit, configured to obtain at least one third time sequence of the terminal based on the second time sequence, where the at least one third time sequence belongs to the second time sequence; and
a determining subunit, configured to determine a label of the third time sequence for any third time sequence in the at least one third time sequence.

In a possible implementation, the obtaining subunit is configured to:
for any period of time sequence in the any second time sequence, determine the any period of time sequence as one third time sequence if duration of the period of time sequence is greater than first duration, and a signal strength fluctuation value of the period of time sequence is less than a first fluctuation threshold, where the signal strength fluctuation value indicates a fluctuation status that is of a signal strength between the terminal and an AP accessed by the terminal and that is in a time period corresponding to the period of time sequence; and
divide the period of time sequence into a plurality of third time sequences of the terminal if the duration is less than second duration and the signal strength fluctuation value is greater than a second fluctuation threshold.

In a possible implementation, the determining subunit is configured to:
if duration of the third time sequence is greater than the first duration, and a signal strength fluctuation value of the third time sequence is less than the first fluctuation threshold, determine the label of the third time sequence as a non-receding label, where the non-receding label indicates that the terminal is not moving away from the accessed AP, and the signal strength fluctuation value indicates a fluctuation status that is of a signal strength between the terminal and the AP accessed by the terminal and that is in a time period corresponding to the third time sequence.

In a possible implementation, the network environment status includes a signal strength between the terminal and an AP accessed by the terminal; and the determining subunit is configured to:
if the third time sequence is a partial time sequence in the any period of time sequence, determine the label of the third time sequence based on a target network environment status in the period of time sequence, where the target network environment status is a network environment status to which a maximum signal strength in the period of time sequence belongs.

In a possible implementation, the determining subunit is configured to:
determine the label of the third time sequence as a non-receding label if the third time sequence in the period of time sequence is located before the target network environment status, where the non-receding label indicates that the terminal is not moving away from the accessed AP; or
determine the label of the third time sequence as a receding label if the third time sequence in the period of time sequence is located after the target network environment status, where the non-receding label indicates that the terminal is moving away from the accessed AP.

In a possible implementation, the determining subunit is configured to:
determine the label of the any third time sequence as the non-receding label or the receding label if the target network environment status is located in the any third time sequence.

In a possible implementation, the first obtaining unit is configured to:
receive, from any AP accessed by the terminal, one second time sequence of the terminal collected by the AP.

In a possible implementation, the to-be-scanned terminal and the at least one terminal meet at least one of the following:
a terminal type of the to-be-scanned terminal is the same as a terminal type of the at least one terminal;
the radio frequency band used by the to-be-scanned terminal is the same as a radio frequency band used by the at least one terminal; and
a signal strength measurement mode supported by the to-be-scanned terminal is the same as a signal strength measurement mode supported by the at least one terminal.

In a possible implementation, the apparatus further includes:
a sending module, configured to send the motion model to at least one AP.

According to a sixth aspect, an electronic device is provided, where the electronic device includes a processor, and the processor invokes program instructions, so that the electronic device implements an operation performed in the terminal scanning method provided in the first aspect or any optional manner in the first aspect.

According to a seventh aspect, an electronic device is provided, where the electronic device includes a processor, and the processor invokes program instructions, so that the electronic device implements an operation performed in the terminal scanning method provided in the second aspect or any optional manner in the second aspect.

According to an eighth aspect, a computer-readable storage medium is provided, where the storage medium stores program code, and the program code is loaded and executed by a processor, so that a computer implements an operation performed in the terminal scanning method provided in the first aspect or any optional manner in the first aspect.

According to a ninth aspect, a computer-readable storage medium is provided, where the storage medium stores program code, and the program code is loaded and executed by a processor, so that a computer implements an operation performed in the terminal scanning method provided in the second aspect or any optional manner in the second aspect.

According to a tenth aspect, a computer program product or a computer program is provided, where the computer program product or the computer program includes program code, and when the program product or the computer program runs on an electronic device, the electronic device is enabled to perform the method provided in the first aspect or various optional implementations in the first aspect.

According to an eleventh aspect, a computer program product or a computer program is provided, where the computer program product or the computer program includes program code, and when the program code runs on an electronic device, the electronic device is enabled to perform the method provided in the second aspect or various optional implementations in the second aspect.

### BRIEF DESCRIPTION OF DRAWINGS

To describe the technical solutions in embodiments of this application more clearly, the following briefly describes the accompanying drawings for describing embodiments. It is clear that the accompanying drawings in the following description show merely some embodiments of this application, and a person of ordinary skill in the art may still derive other drawings from these accompanying drawings without creative efforts.
FIG. 1 is a schematic diagram of a terminal scanning system according to an embodiment of this application;
FIG. 2 is a schematic diagram of a structure of an electronic device according to an embodiment of this application;
FIG. 3 is a flowchart of a terminal scanning method according to an embodiment of this application;
FIG. 4 is a schematic diagram of a motion model training process according to an embodiment of this application;
FIG. 5 is a flowchart of a terminal scanning method according to an embodiment of this application;
FIG. 6 is a flowchart of triggering collaborative scanning according to an embodiment of this application;
FIG. 7 is a schematic diagram of a structure of a terminal scanning apparatus according to an embodiment of this application; and
FIG. 8 is a schematic diagram of a structure of a terminal scanning apparatus according to an embodiment of this application.

### DESCRIPTION OF EMBODIMENTS

To make the objectives, technical solutions, and advantages of this application clearer, the following further describes the implementations of this application in detail with reference to the accompanying drawings.

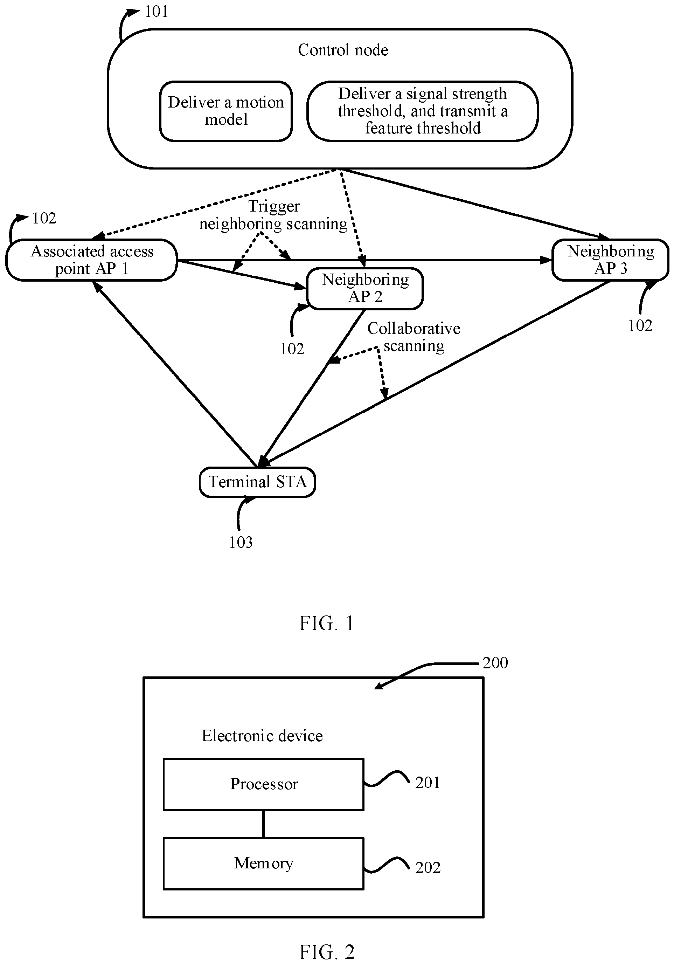

FIG. 1 is a schematic diagram of a terminal scanning system according to an embodiment of this application. Referring to FIG. 1, the system 100 includes a control node 101, a plurality of APs 102, and a plurality of terminals (station, STA) 103. The system 100 covers WLAN, and the plurality of APs 102 interact with the plurality of stations 103 and the control node 101 in the WLAN. The terminal 103 includes any terminal device that may access an AP, such as a notebook computer, a mobile phone, or a tablet computer.

The control node 101 is configured to send at least one of a signal strength threshold, a traffic transmission rate threshold, and a motion model to the plurality of APs 102, so that the plurality of APs 102 determine, based on the at least one of the signal strength threshold, the traffic transmission rate threshold, and the motion model that are delivered by the control node 101, whether collaborative scanning needs to be performed on the terminal 103 that accesses the plurality of APs 102. The control node 101 may be an access controller (access controller, AC) or a data analyzer.

Any AP 102 in the plurality of APs 102 is configured to access at least one terminal 103, and may provide a channel, a wireless fidelity (wireless fidelity, Wi-Fi) signal, or the like for each accessing terminal 103, so that each terminal performs a network service, such as a voice service, a video service, or a game service through the channel and the Wi-Fi signal. An AP accessed by a terminal 103 is considered as an associated AP of the terminal 103, and an AP that is located around the associated AP and does not access the terminal 103 may be considered as a neighboring AP of the associated AP. For example, in FIG. 1, the terminal 103 accesses an associated AP 1, and a neighboring AP of the associated AP 1 includes a neighboring AP 2 and a neighboring AP 3. The collaborative scanning in embodiments of this application refers to that an associated AP of a terminal and the neighboring AP of the associated AP collaboratively scan the terminal.

The AP 102 is further configured to receive at least one of a signal strength threshold, a traffic transmission rate threshold, and a motion model that is delivered by the control node 101, and obtain, in real time, a signal strength between the AP 102 and each terminal 103 that accesses the AP 102, where the AP 102 is also an associated AP of each terminal 103 that accesses the AP 102. If a signal strength between a terminal 103 and the associated AP is less than the signal strength threshold delivered by the control node 101, it indicates that a signal strength of a radio signal that is sent by the associated AP and that is received by the terminal 103 in this case is slightly low, and the terminal 103 may be moving backward to the associated AP. To avoid further reduction of the signal strength of the radio signal received by the terminal 103 with movement of the terminal 103, subsequently, the associated AP may need to guide the terminal 103 to roam to the neighboring AP. Before guiding the terminal 103 to roam, the associated AP and the neighboring AP need to perform collaborative scanning on the terminal 103. Therefore, to avoid missing an optimal occasion for guiding the terminal 103 to roam, if the signal strength between the terminal 103 and the associated AP is less than the signal strength threshold, the associated AP triggers the neighboring AP to perform collaborative scanning on the terminal 103. In addition, the neighboring AP may be prevented from continuously scanning the terminal 103 in real time, thereby reducing a quantity of times that the neighboring AP scans the terminal 103 by and reducing calculation overheads of the neighboring AP.

In some embodiments, the AP 102 is further configured to determine, in real time, a traffic feature of each terminal 103 that accesses the AP 102, where a traffic feature of a terminal 103 indicates a traffic transmission rate between the associated AP of the terminal 103 and the terminal 103, to indicate a network traffic requirement of the terminal 103 in a current time period. If a feature value of the traffic feature of a terminal 103 is greater than the traffic transmission rate threshold delivered by the control node, it indicates that the terminal 103 is performing a terminal service in a current time period, and the terminal service requires a large amount of network traffic to be normally performed, for example, a video service or a game service. To ensure that the terminal 103 may obtain sufficient network traffic used by the terminal service, that is, to ensure normal running of the terminal service, the terminal 103 may need to be guided by the associated AP to roam to the neighboring AP subsequently. Then, to avoid missing an optimal occasion for guiding the terminal 103 to roam, if a feature value of a traffic feature of a terminal 103 is greater than the traffic transmission rate threshold, the associated AP triggers the neighboring AP to perform collaborative scanning on the terminal 103.

In some embodiments, the AP 102 is further configured to obtain, in real time, a motion feature of each terminal 103 that accesses the AP 102. If a motion feature of a terminal 103 indicates that the terminal 103 is moving away from the AP 102, the AP 102 triggers the neighboring AP to perform collaborative scanning on the terminal 103, to avoid missing the optimal occasion for guiding the terminal 103 to roam. In a possible implementation, after the terminal 103 accesses the AP 102, the AP 102 obtains a time sequence of the terminal 103, and inputs the time sequence into the motion model delivered by the control node 101. The motion model outputs the motion feature of the terminal 103 based on the input time sequence, where the time sequence includes network environment statuses of the terminal at a plurality of time points, and the network environment status indicates a network environment that is of the terminal 103 and that corresponds to the AP 102.

In some embodiments, the associated AP first determines whether the signal strength between the terminal and the associated AP is less than the signal strength threshold. If yes, the associated AP triggers the neighboring AP to perform collaborative scanning on the terminal, and if not, the associated AP determines whether the feature value of the traffic feature of the terminal is greater than the traffic transmission rate threshold. If yes, the associated AP triggers the neighboring AP to perform collaborative scanning on the terminal, and if not, the associated AP obtains the motion feature of the terminal based on the motion model. If the motion feature indicates that the terminal is moving away from the associated AP, the associated AP triggers the neighboring AP to perform collaborative scanning on the terminal. If the motion feature does not indicate that the terminal is moving away from the associated AP, the associated AP does not trigger the neighboring AP to perform collaborative scanning on the terminal.

It should be noted that the motion model may be obtained by the control node through training, or the motion model may be trained by another device other than the control node, and then the control node obtains, from the another device, the motion model trained by the another device. For a training process of the motion model, refer to the following description.

FIG. 2 is a schematic diagram of a structure of an electronic device according to an embodiment of this application. The electronic device 200 may be configured as a control node or an AP. The electronic device 200 may vary greatly due to different configurations or performance, and includes one or more processors 201 and one or more memories 202. The processor includes a central processing unit (central processing unit, CPU), and the memory 202 stores at least one piece of program code, the at least one piece of program code is loaded and executed by the processor 201 to implement the terminal scanning method provided in the following method embodiments. If the electronic device 200 is configured as the control node, the at least one piece of program code is loaded and executed by the processor 201, so that the electronic device 200 implements the steps performed by the control node in the following method embodiments. If the electronic device 200 is configured as the AP, the at least one piece of program code is loaded and executed by the processor 201, so that the electronic device 200 implements the steps performed by the AP in the following method embodiments. Certainly, the electronic device 200 may further include components such as a wired or wireless network interface, a keyboard, and an input/output (I/O) interface, to facilitate input and output. The electronic device 200 may further include another component configured to implement a function of a device. Details are not further described herein.

In an example embodiment, a computer-readable storage medium is further provided, for example, a memory including program code. The program code may be executed by a processor in the control node or the AP to complete the terminal scanning method in the following embodiments. For example, the computer-readable storage medium is a non-transitory computer-readable storage medium, such as a read-only memory (read-only memory, ROM), a random access memory (random access memory, RAM), a compact disc read-only memory (compact disc read-only memory, CD-ROM), a magnetic tape, a floppy disk, or an optical data storage device.

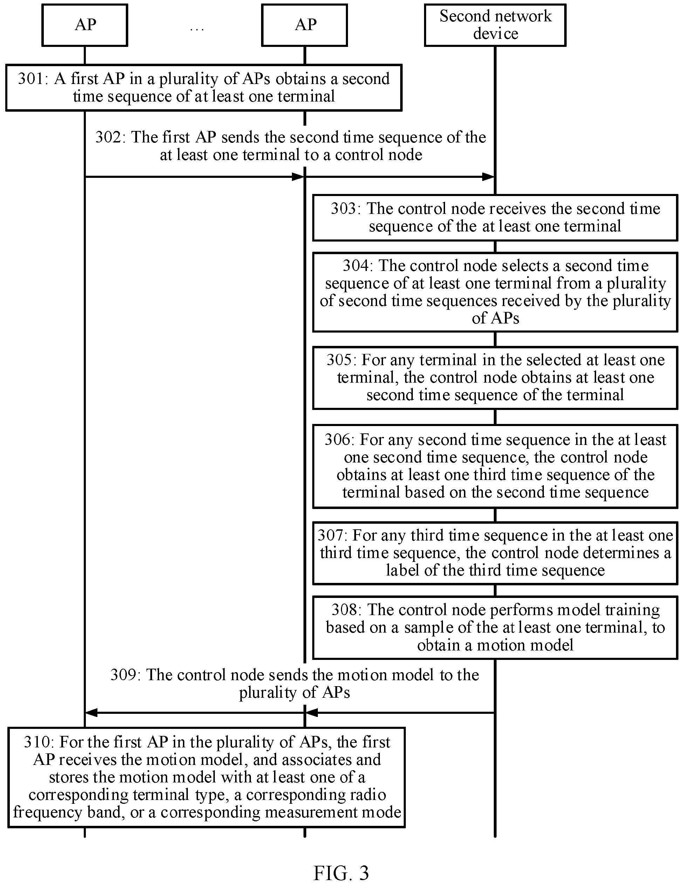

In some embodiments, in a moving process, a terminal may access at least one AP. The control node separately obtains, from the at least one AP, a network environment status that the terminal is in after the terminal accesses each AP, and obtains a motion model through training based on network environment statuses of a plurality of terminals. For further description of the process, refer to FIG. 3, namely, a flowchart of a terminal scanning method according to an embodiment of this application.

301: A first AP in a plurality of APs obtains a second time sequence of at least one terminal, where the second time sequence of the at least one terminal is used to obtain a motion model through training, a second time sequence of one terminal includes network environment statuses of the terminal at a plurality of time points, and the network environment status indicates a network environment that is of the terminal and that corresponds to the first AP.

The first AP is any AP in the plurality of APs, and the at least one terminal accesses the first AP. For any terminal in the at least one terminal, one network environment status of the terminal corresponds to one time point. The time point corresponding to the network environment status is a collection time point for the network environment status, and the network environment status can indicate a network environment, at one time point, that is of the terminal and that corresponds to the first AP. A time period between time points corresponding to two adjacent network environment statuses in the second time sequence of the terminal is one collection periodicity. Duration of the collection periodicity is denoted as target duration. The target duration is duration between the time points of the two adjacent network environment statuses. The target duration may be set based on a specific implementation environment. For example, the target duration is one second. The target duration is not specifically limited herein in embodiments of this application.

The network environment status includes a network status of the terminal, and the network status is status information of the terminal at one time point. The network status of the terminal includes at least one of a signal strength between the terminal and the first AP and a radio frequency band used by the terminal, where the signal strength between the terminal and the first AP is a signal strength of a radio signal that is received by the terminal and that is transmitted by the first AP to the terminal, and the radio frequency band used by the terminal is a radio frequency band used by the terminal at the time point, and is one of radio frequency bands supported by the terminal. The radio frequency bands supported by the terminal include 2.4 GHz, 5 GHz, and another radio frequency band. The another radio frequency band is not specifically limited in embodiments of this application. To enable the network environment status to correspond to the terminal, in some embodiments, the network status further includes address information of the terminal. The address information is a media access control (media access control, MAC) address or an internet protocol (internet protocol, IP) address of the terminal. To enable the network environment status to correspond to one time point, in some embodiments, the network status further includes the time point. Different types of terminals support different measurement modes for measuring a signal strength. In some embodiments, the network status further includes a mode identifier of a measurement mode supported by the terminal, where the measurement mode supported by the terminal includes a received signal strength indicator (received signal strength indicator, RSSI) measurement mode and a link margin (link margin, LM) measurement mode.

In some embodiments, the network environment status further includes a working status of the first AP (namely, a working status of an AP accessed by the terminal), and the working status is status information of the first AP at one time point. The working status of the first AP includes at least one of a channel identifier, a channel bandwidth, channel utilization, a quantity of accessing terminals, and transmit power of the first AP.

The network environment status includes attribute values of a plurality of status attributes, in other words, any value in the network environment status is an attribute value of a status attribute. For example, an attribute value of a signal strength attribute is the signal strength between the terminal and the first AP, an attribute value of a frequency band attribute is the radio frequency band of the terminal, and the mode identifier is an attribute value of a measurement mode attribute.

For any terminal in the at least one terminal, that the first AP obtains a second time sequence of the terminal includes: The first AP respectively collects network environment statuses of the terminal at a plurality of consecutive time points, and forms, based on a sequence of the time points, the second time sequence of the terminal by using the network environment statuses of the terminal that are collected at the plurality of consecutive time points.

That the first AP collects one network environment status of the terminal at one time point includes: The first AP obtains, at one time point, a network status of the terminal at the time point, and determines the network status of the terminal at the time point as a network environment status of the terminal at the time point; or the first AP further obtains a working status of the first AP at the time point, and determines the network status of the terminal at the time point and the working status of the first AP at the time point as the network environment status of the terminal at the time point. For a process in which the first AP obtains, at one time point, a network status of the terminal at the time point and a working status of the first AP at the time point, refer to the following step 3011 and step 3012.

Step 3011. The first AP obtains, at one time point, a network status of the terminal at the time point.

The first AP determines, at the time point, a radio frequency band used by the terminal at the time point and a measurement mode supported by the terminal, and the first AP measures, based on the determined radio frequency band and the determined measurement mode supported by the terminal, a signal strength of the terminal, to obtain the signal strength between the terminal and the first AP at the time point; and the first AP determines at least one of the determined radio frequency band and the measured signal strength between the terminal and the first AP as the network status of the terminal at the time point. The signal strength between the terminal and the first AP indicates signal quality of a downlink signal received by the terminal from the first AP.

In some embodiments, a process in which the first AP determines the measurement mode supported by the terminal includes: The first AP stores terminal profiles corresponding to a plurality of terminal types, and the first AP queries a stored terminal profile corresponding to a terminal type of the terminal, and obtains, from the found terminal profile, the measurement mode supported by the terminal. A terminal profile of a terminal type indicates a roaming guidance feature of a terminal of the terminal type, for example, a measurement mode supported by the terminal, whether the terminal supports downlink signal quality measurement, and whether the terminal supports roaming guidance.

Step 3012. The first AP obtains, at the time point, a working status of the first AP at the time point.

The first AP calculates, at the time point, channel utilization that is at the time point and that is of a channel on which the first AP communicates with the terminal, counts a quantity of terminals that access the first AP at the time point, and determines at least one of a channel identifier of the channel, a channel bandwidth of the channel, the calculated channel utilization, the counted quantity of terminals, and transmit power of the first AP at the time point as the working status of the first AP at the time point.

302: The first AP sends the second time sequence of the at least one terminal to a control node.

Each of the at least one terminal corresponds to one terminal type. For example, the at least one terminal includes two mobile phones and two notebook computers, where the two mobile phones belong to a same terminal type, and the two notebook computers belong to a same terminal type.

In a possible implementation, the first AP sends the second time sequence of the at least one terminal to the control node based on the terminal type of the at least one terminal. Optionally, the first AP forms a second time sequence of a terminal of a same terminal type in the at least one terminal into a first sequence group, and sends the first sequence group to the control node. One first sequence group includes a second time sequence of at least one terminal of one terminal type.

In some embodiments, before the first AP sends each second time sequence to the control node, the first AP first determines whether there is an abnormal value in each piece of data in each network environment status in each second time sequence. If there is the abnormal value, the first AP updates the abnormal value to a preset normal value, and then sends an updated second time sequence to the control node.

For example, if signal strength in a network environment status is an abnormal value, the first AP updates the abnormal signal strength in the network environment status to a preset normal signal strength value. For another example, channel utilization in the network environment status is 95%, and a quantity of accessing terminals is five. When the quantity of accessing terminals is five, generally, the channel utilization of the first AP may reach a maximum of 80%. It is clear that 95% is an abnormal value, and the first AP updates the channel utilization, namely, 95%, in the network environment status to 80%.

303: The control node receives the second time sequence of the at least one terminal.

For any terminal in the at least one terminal, the control node receives, from the first AP, one second time sequence of the terminal collected by the AP.

The first AP is any AP in the plurality of APs managed by the control node, and each AP in the plurality of APs can perform the process described in the foregoing step 301 and step 302. Therefore, the control node can respectively receive, from the plurality of APs, second time sequences of terminals that access the plurality of APs.

304: The control node selects a second time sequence of at least one terminal from the plurality of second time sequences received by the plurality of APs.

When the at least one terminal in step 304 is one terminal, the control node selects a second time sequence that belongs to the terminal from the plurality of second time sequences.

When the at least one terminal in step 304 includes a plurality of terminals, the plurality of terminals meet a target condition, and the target condition includes at least one of the following: terminal types of the plurality of terminals are the same; radio frequency bands used by the plurality of terminals are the same; and signal strength measurement modes supported by the plurality of terminals are the same. In different target conditions, processes in which the control node selects the second time sequence of the at least one terminal that meets the target condition are different. For details, refer to the following Case 1 to Case 3.

Case 1. The target condition is any one of the foregoing three conditions.

If the any condition is that the terminal types of the plurality of terminals are the same, the control node groups the plurality of second time sequences into at least one second sequence group based on terminal types of the terminals corresponding to the plurality of second time sequences, and each second sequence group includes a second time sequence of a terminal of one terminal type. In this case, all terminals corresponding to second time sequences in each second sequence group meet the target condition described in Case 1.

In a possible implementation, each time after receiving a second time sequence, the control node determines, based on address information in a network environment status in the second time sequence, a terminal type of a terminal indicated by the address information, and groups the second time sequence into a second sequence group corresponding to the terminal type.

In another possible implementation, if the plurality of APs send the second time sequences to the control node in a form of the first sequence group, the plurality of second time sequences belong to a plurality of first sequence groups. After the control node receives the plurality of first sequence groups from the plurality of APs, the control node combines first sequence groups belonging to the same terminal type in the plurality of first sequence groups into one second sequence group.

If the any condition is that the radio frequency bands used by the plurality of terminals are the same, the control node groups the plurality of second time sequences into at least one third sequence group based on radio frequency bands in the plurality of second time sequences. Each third sequence group includes a plurality of second time sequences, and radio frequency bands in each third sequence group are the same. In this case, all terminals corresponding to the second time sequences in each third sequence group meet the target condition described in Case 1.

If the any condition is that the signal strength measurement modes supported by the plurality of terminals are the same, the control node groups the plurality of second time sequences into at least one fourth sequence group based on mode identifiers of measurement modes in the plurality of second time sequences. Each fourth sequence group includes a plurality of second time sequences, and mode identifiers in each fourth sequence group are the same. In this case, all terminals corresponding to the second time sequences in each fourth sequence group meet the target condition described in Case 1.

Case 2. The target condition is that the radio frequency bands of the plurality of terminals are the same and the signal strength measurement modes supported by the plurality of terminals are the same.

The control node groups the plurality of second time sequences into at least one fifth sequence group. Each fifth sequence group includes a plurality of second time sequences, radio frequency bands in each fifth sequence group are the same, and mode identifiers of measurement modes in each fifth sequence group are the same. In this case, all terminals corresponding to the second time sequences in each fifth sequence group meet the target condition described in Case 2.

For example, the radio frequency bands of the terminals include 2.4 GHz and 5 GHz, and the measurement modes include the RSSI measurement mode and the LM measurement mode, where 0 is a mode identifier of the RSSI measurement mode, and 1 is a measurement mode of the LM measurement mode. In this case, the control node groups all second time sequence statuses that include 2.4 GHz and the mode identifier, namely, 0, and that are in the plurality of second time sequences into a fifth sequence group, where the fifth sequence group corresponds to a terminal that supports the RSSI measurement mode in the 2.4 GHz frequency band. The control node groups all second time sequences that include 2.4 GHz and the mode identifier, namely, 1, and that are in the plurality of second time sequences into a fifth sequence group, where the fifth sequence group corresponds to a terminal that supports the LM measurement mode in the 2.4 GHz frequency band. The control node groups all second time sequence statuses that include 5 GHz and the mode identifier, namely, 0, and that are in the plurality of second time sequences into a fifth sequence group, where the fifth sequence group corresponds to a terminal that supports the RSSI measurement mode in the 5 GHz frequency band. The control node groups all second time sequences that include 5 GHz and the mode identifier, namely, 1, and that are in the plurality of second time sequences into a fifth sequence group, where the fifth sequence group corresponds to a terminal that supports the LM measurement mode in the 5 GHz frequency band.

Case 3. The target condition is that the terminal types of the plurality of terminals are the same, the radio frequency bands of the plurality of terminals are the same, and the signal strength measurement modes supported by the plurality of terminals are the same.

The control node first groups the plurality of second time sequences into a plurality of second sequence groups, and then groups the second time sequences in each second sequence group into a plurality of sixth sequence groups in the grouping manner in Case 2. In this case, all terminals corresponding to second time sequences in each sixth sequence group meet the target condition described in Case 3.

Alternatively, the control node first groups the plurality of second time sequences into a plurality of fifth sequence groups, and then groups second time sequences in each fifth sequence group into a plurality of sixth sequence groups in the grouping manner in Case 1. In this case, all terminals corresponding to second time sequences in each sixth sequence group meet the target condition described in Case 3.

It should be noted that in some embodiments, the target condition may further include another condition, for example, that a quantity of terminals in the second time sequence of the at least one terminal belongs to a target quantity range. A grouping manner of the another condition is similar to that of the foregoing Case 1 to Case 3. Details are not described herein again.

305: For any terminal in the selected at least one terminal, the control node obtains at least one second time sequence of the terminal, where one second time sequence includes network environment statuses of the terminal at a plurality of time points, and the network environment statuses in the second time sequence correspond to a same AP.

The network environment statuses in each second time sequence correspond to the same AP. Optionally, the network environment statuses in each second time sequence are from the same AP. In a possible implementation, the control node obtains, as one of the at least one second time sequence, a second time sequence of the terminal that is received from one AP.

For any sequence group in the second sequence group to the sixth sequence group, the control node groups the second time sequences in the sequence group into a plurality of subsets. Each subset includes at least one second time sequence of one terminal, and address information in all second time sequences in a same subset is the same, in other words, each subset corresponds to one terminal.

In a moving process, the terminal may access at least one AP. Each time the terminal accesses an AP, the AP obtains a network environment status of the terminal in real time, forms a plurality of obtained network environment statuses of the terminal into one second time sequence, and sends the second time sequence to the control node. The control node groups the second time sequence statuses in the sequence group into the subsets, so that a second time sequence in one subset includes a second time sequence of a terminal sent to the control node by at least one AP accessed by the terminal in a moving process. To be specific, the second time sequence in the subset can reflect a network environment that is of the terminal and that corresponds to the at least one AP in the moving process.

For any subset in the sequence group, the control node obtains each second time sequence in the subset as one second time sequence of the terminal. Because the second time sequence comes from one AP, network environment statuses in the second time sequence all come from the same AP. In other words, each second time sequence corresponds to one AP accessed by the terminal in the moving process, and each second time sequence reflects a network environment when the terminal moves in a process of accessing an AP.

For any second time sequence in the at least one second time sequence, there may be an abnormal value for a signal strength in the second time sequence. In some embodiments, the control node replaces the abnormal signal strength in the second time sequence with a normal value, to avoid impact of the abnormal signal strength on subsequent training. In a possible implementation, the control node sequentially arranges, based on a sequence of time points corresponding to a plurality of network environment statuses in the second time sequence, a plurality of signal strengths in the plurality of network environment statuses, to obtain a signal strength sequence, where the signal strength sequence can reflect a change trend of the plurality of signal strengths with the time points. For any signal strength in the signal strength sequence, if a distance between the signal strength and a closest signal strength of the signal strength is greater than a target distance, the control node determines that the signal strength is an outlier signal strength, and the outlier signal strength is an abnormal signal strength. Alternatively, the control node converts the plurality of signal strengths according to a specific rule. However, if the signal strength changes to a negative value after conversion processing, the control node determines that the signal strength is an abnormal signal strength. For example, a normal signal strength is distributed around -50 dBm, and is a positive value. If the signal strength is distributed around -50 dBm, but is converted to a negative value, the control node determines that the signal strength is the abnormal signal strength. After the control node determines at least one abnormal signal strength in the plurality of signal strengths, for any abnormal signal strength, the control node updates the abnormal signal strength. A distance between an updated signal strength and a closest signal strength of the updated signal strength is less than or equal to the target distance, and the updated signal strength does not change to a negative value after conversion processing.

306: For any second time sequence in the at least one second time sequence, the control node obtains at least one third time sequence of the terminal based on the second time sequence.

A third time sequence may be the second time sequence, or may be a period of time sequence in the second time sequence. A network environment status in the third time sequence can reflect that the terminal has an obvious motion feature. The obvious motion feature indicates that a displacement that occurs in the terminal in a time period is not obvious or is particularly obvious. The obvious motion feature includes a static motion feature, an approaching motion feature, and a receding motion feature. The static motion feature indicates that the terminal does not move or moves within a small range in the time period, and in this case, a displacement that occurs in the terminal in the time period is not obvious. The approaching motion feature indicates that the terminal is approaching, in the time period, the AP accessed by the terminal, or indicates that a distance between the terminal and the AP becomes smaller in the time period, and in this case, the displacement that occurs in the terminal in the time period is particularly obvious. The receding motion feature indicates that a terminal is moving away from the AP in the time period, or indicates that the distance between the terminal and the AP becomes greater in the time period, and in this case, the displacement that occurs in the terminal in the time period is also particularly obvious.

However, although a motion feature reflected by some network environment statuses consecutive in terms of time can indicate that a displacement that occurs in the terminal in a time period is obvious, the displacement cannot be particularly obvious, in other words, the displacement that occurs is generally obvious. For example, the terminal moves back and forth in a specific range in the time period, but does not always approach the AP nor move away from the AP, to be specific, there is a largest distance and a smallest distance between the terminal and the AP in the time period. In this case, it is considered that the displacement that occurs in the terminal in the time period is generally obvious and does not have an obvious motion feature, and subsequently, the network environment status without the obvious motion feature is not used to train.

In a possible implementation, for any second time sequence in the at least one second time sequence, the control node divides the second time sequence into at least one period of time sequence, where each period of time sequence in the at least one period of time sequence includes a plurality of network environment statuses, and a plurality of time points corresponding to the plurality of network environment statuses are consecutive (to be specific, duration between adjacent time points in the plurality of time points corresponding to the plurality of network environment statuses is the target duration). If the at least one time sequence is one period of time sequence, the period of time sequence is the second time sequence. If the at least one time sequence is a plurality of periods of time sequences, each period of time sequences in the plurality of periods of time sequences is a time sequence corresponding to one time period in the second time sequence, and duration of each period of time sequence in the plurality of periods of time sequences may be the same or may be different.

For any period of time sequence in the at least one period of time sequence, the control node obtains duration and a signal strength fluctuation value of the period of time sequence; and the control node obtains at least one third time sequence based on the period of time sequence, the duration, and the signal strength fluctuation value. The duration is a difference between a largest time point and a smallest time point in a plurality of time points corresponding to a plurality of network environment statuses in the period of time sequence. The signal strength fluctuation value indicates a fluctuation status that is of a signal strength between the terminal and the AP accessed by the terminal and that is in a time period corresponding to the period of time sequence, and may be a fluctuation status of a plurality of signal strengths in the plurality of network environment statuses in the period of time sequence, where each network environment status has a signal strength. Optionally, the signal strength fluctuation value is a variance between the plurality of signal strengths in the plurality of network environment statuses in the period of time sequence.

In a possible implementation, a process in which the control node obtains the at least one third time sequence based on the period of time sequence, the duration, and the signal strength fluctuation value includes the following step A to step C.

Step A. If the duration of the period of time sequence is greater than first duration, and the signal strength fluctuation value of the period of time sequence is less than a first fluctuation threshold, the control node determines the period of time sequence as one third time sequence.

If the signal strength fluctuation value is less than the first fluctuation threshold, it indicates that in a process in which the AP accessed by the terminal collects the period of time sequence, a change of the signal strength between the terminal and the AP is small, and the displacement that occurs in the terminal is not obvious. If the duration is further greater than the first duration, it indicates that the displacement that occurs in the terminal is not obvious in a very long time period (namely, the time period corresponding to the period of time sequence). In this case, the network environment statuses in the period of time sequence have the static motion feature, and the control node determines the period of time sequence as one third time sequence.

Step B. If the duration is less than second duration, and the signal strength fluctuation value is greater than a second fluctuation threshold, the control node divides the period of time sequence into a plurality of third time sequences of the terminal.

The first duration is greater than the second duration, and the first fluctuation threshold is less than the second fluctuation threshold.

If the signal strength fluctuation value is greater than the second fluctuation threshold, it indicates that in a process in which the AP accessed by the terminal collects the period of time sequence, a change of the signal strength between the terminal and the AP is large, and the displacement that occurs in the terminal is obvious. If the target duration is further less than the second duration, it indicates that the displacement that occurs in the terminal is obvious in a very short time period (namely, the time period corresponding to the period of time sequence). In this case, the network environment statuses in the period of time sequence have the approaching motion feature and the receding motion feature. To distinguish between the network environment status having the approaching motion feature and the network environment status having the receding motion feature in the period of time sequence, the control node divides the period of time sequence into the plurality of third time sequences of the terminal.

The control node may divide the period of time sequence into the plurality of third time sequences in a manner of a sliding window. In a possible implementation, the control node divides the period of time sequence into the plurality of third time sequences based on the sliding window, where a size of the sliding window is a quantity of network environment statuses in one third time sequence. The control node slides, starting from the first network environment status in the period of time sequence, the sliding window on the period of time sequence for a plurality of times at a specific sliding step, until the sliding window covers a last network environment status in the period of time sequence. Each time the sliding window slides, the control node determines a plurality of network environment statuses covered by the sliding window as one third time sequence.

The sliding step is not specifically limited in embodiments of this application. An example in which the sliding step is 1, and the size of the sliding window is 5 is used. If the period of time sequence includes 30 network environment statuses, and initially, the sliding window covers the first network environment status to the fifth network environment status, the control node determines the first network environment status to the fifth network environment status as one third time sequence. Then the sliding window slides one step, the sliding window covers the second network environment status to the sixth network environment status, and the control node determines the second network environment status to the sixth network environment status as one third time sequence. The reset can be deduced by analogy, until the sliding window covers the 30^{th} network environment status.

Step C. If the duration is greater than or equal to the second duration or less than or equal to the first duration, and the signal strength fluctuation value is greater than or equal to the first fluctuation threshold or less than or equal to the second fluctuation threshold, the control node does not determine the period of time sequence as a third time sequence.

If the signal strength fluctuation value is greater than or equal to the first fluctuation value or less than or equal to the second fluctuation threshold, it indicates that in a process in which the AP accessed by the terminal collects the period of time sequence, there is a specific change in the signal strength between the terminal and the AP, and the displacement that occurs in the terminal is generally obvious. If the duration is greater than or equal to the second duration or less than or equal to the first duration, it indicates that the displacement that occurs in the terminal in the time period corresponding to the period of time sequence is generally obvious. In this case, the plurality of network environment statuses in the period of time sequence do not have an obvious motion feature, and the control node does not determine the period of time sequence as the third time sequence.

307: For any third time sequence in the at least one third time sequence, the control node determines a label of the third time sequence, where the label indicates a motion feature of the terminal reflected in the third time sequence.

The motion feature of the terminal reflected in the third time sequence is an obvious motion feature that a network environment status in the third time sequence has. The label includes a first label, a second label, or a third label. The first label indicates that the network environment status in the third time sequence has the static motion feature, the second label indicates that the network environment status in the third time sequence has the approaching motion feature, and the third motion label indicates that the network environment status in the third time sequence has the receding motion feature. In some embodiments, the third label is also referred to as a receding label, to indicate that the terminal is moving away from the accessed AP.

For any third time sequence in the at least one third time sequence, if duration of the third time sequence is greater than the first duration, and a signal strength fluctuation value of the third time sequence is less than the first fluctuation threshold, it indicates that the network environment status in the any third time sequence has the static motion feature, and the control node determines the label of the third time sequence as the first label. In this case, the third time sequence is the period of time sequence.

If the third time sequence is a partial time sequence in the period of time sequence, it indicates that the third time sequence is a time sequence obtained through the sliding window, and the network environment status in the third time sequence may have the approaching motion feature, or may have the receding motion feature. In a possible implementation, the control node determines a target network environment status in the period of time sequence based on signal strengths in the period of time sequence, and determines the label of the third time sequence based on the target network environment status in the period of time sequence. The target network environment status is a network environment status to which a largest signal strength in the period of time sequence belongs.

In a possible implementation, the control node determines the label of the third time sequence based on a location of the target network environment status in the period of time sequence. A network environment status located before the target network environment status in the period of time sequence has the approaching motion feature, and a network environment status located after the target network environment status in the period of time sequence has the receding motion feature. In this case, if the third time sequence is located before the target network environment status in the period of time sequence, the control node determines the label of the third time sequence as the second label; if the third time sequence in the period of time sequence is located after the target network environment status, the control node determines the label of the third time sequence as the third label; or if the target network environment status is located in the third time sequence, the control node determines the label of the third time sequence as the non-receding label or the receding label. Optionally, if the target network environment status is located in the third time sequence, the control node determines a first number of network environments located before the target network environment status in the third time sequence, and determines a second number of network environments located after the target network environment status in the third time sequence. If the first number is greater than the second number, the control node determines the label of the third time sequence as the non-receding label; otherwise, the control node determines the label of the third time sequence as the receding label.

An objective of embodiments of this application is to obtain, through training, a motion model that can identify the network environment status having the receding motion feature. Therefore, an identification result of the network environment status having the approaching motion feature or the static motion feature is not concerned. In some embodiments, the control node replaces the first label and the second label with the non-receding label, where the non-receding label indicates that the terminal is not moving away from the accessed AP, to reflect that the terminal is moving away from the accessed AP.

After the control node determines the label of the third time sequence, the control node labels the determined label for the third time sequence, and uses the third time sequence and the label of the third time sequence as a sample of the terminal. For each of the at least one third time sequence, the control node may obtain a sample of the any terminal by performing the process shown in step 307.

It should be noted that in some embodiments, if the target network environment status is in any third time sequence, it indicates that the third time sequence includes the network environment status having the approaching motion feature and the network environment status having the receding motion feature. In this case, the control node determines that the motion feature reflected in the network environment status in the third time sequence is unstable, and the control node does not label the label of the third time sequence, and does not use the third time sequence as a time sequence in a sample.

It should be noted that the process shown in step 306 to step 307 is a process in which the control node obtains at least one sample of the terminal based on the second time sequence. The process shown in step 305 to step 307 is also a process in which the control node obtains the sample of the at least one terminal.

308: The control node performs model training based on the sample of the at least one terminal, to obtain a motion model, where the motion model is used to output a motion feature of a to-be-scanned terminal, to determine whether to scan the to-be-scanned terminal.

There is at least one sample of any of the at least one terminal, and the motion model is a neural network, for example, a multilayer perception (multilayer perception, MLP) neural network or a neural network of another type.

After the control node obtains the sample of the at least one terminal, the control node groups the sample of the at least one terminal into a training set and a test set based on a specific proportion. The sample in the training set is used to train a model, and the sample in the test set is used to test a trained motion model.

The control node trains the initial model based on a plurality of samples in the test set. In a process of training the initial model, a quantity of *m* times of training is preset. In an *i*^{th} training process, the control node inputs a plurality of third time sequences in a plurality of samples in the test set into an *i*^{th} model, and the *i*^{th} model identifies, based on the plurality of input third time sequences, a motion feature that a network environment status in each third time sequence has, and outputs target labels of the plurality of third time sequences. A target label of a third time sequence indicates the motion feature that the network environment status in the third time sequence has and that is identified by the model. The control node calculates, based on labels in the plurality of samples and the target labels of the plurality of third time sequences, accuracy of identifying, by the model, a time sequence that has the receding motion feature. If the accuracy is less than first accuracy, and *i* < *q,* the control node continues to perform iteration based on an optimization algorithm, and updates a model parameter of the *i*^{th} model, to obtain an ***i* + 1** ^{th} model, and the control node enters an ***i*** + 1 ^{th} training process. If the accuracy is greater than or equal to the first accuracy, the control node ends training, and determines the *i*^{th} model as the motion model. If the accuracy is less than the first accuracy and *i* ≥ *m*, the control node ends training, to prevent the control node from continuously performing iterative training in a case that no motion model is obtained through training. *m* ≥ *i* ≥ 1. When *i* = 1 , the *i*^{th} model is an initial model, and when ***i*** > 1, the ***i***^{th} model is the ***i* - 1**^{th} model obtained after the parameter is updated in the *i* - 1^{th} training process. The optimization algorithm includes a gradient descent algorithm.

The control node calculates, based on labels in the plurality of samples and the target labels of the plurality of third time sequences, accuracy of identifying, by the model, a time sequence that has the receding motion feature, including: the control node collects, based on the labels in the plurality of samples and the target labels of the plurality of third time sequences, statistics on a first target quantity of third time sequences that is correctly identified and that has the receding motion feature, collects statistics on a second target quantity of third labels in the plurality of samples, and determines a ratio of the first target quantity to the second target quantity as the accuracy. The label of the third time sequence having the receding motion feature is correctly identified as the third label, and the target label of the third time sequence is the third label.

If the motion model is not obtained through training based on the foregoing training process, a person skilled in the art adjusts, based on expert experience, a status attribute in each network environment status in each sample in the training set, and then the control node performs model training based on the adjusted sample. For example, a radio frequency band and a channel identifier in each network environment status are removed, and then the initial model is trained based on a plurality of samples from which the radio frequency band and the channel identifier are removed. Certainly, the person skilled in the art may first adjust, based on the expert experience, the status attribute in each network environment status in each sample in the training set, and then the control node performs model training based on the adjusted sample. If the motion model is still not obtained through training based on the adjusted sample, the person skilled in the art continues to adjust, based on the expert experience, the status attribute in each network environment status in each sample in the training set, until the control node may obtain the motion model through training based on the adjusted sample.

After the control node obtains the motion model through training, the control node inputs the plurality of third time sequences in the plurality of samples in the test set into the motion model. The motion model outputs the target labels of the plurality of third time sequences based on the plurality of input third time sequences, and the control node calculates, based on the labels in the plurality of samples in the test set and the target labels of the plurality of third time sequences, the accuracy of identifying, by the motion model, a time sequence that has the receding motion feature. If the calculated accuracy is greater than the second accuracy, it indicates that when identifying another time sequence, the motion model may also accurately identify another time sequence that has the receding motion feature, and the control node verifies the motion model successfully; and otherwise, the control node verifies the motion model unsuccessfully. If the control node verifies the motion model unsuccessfully, the control node continues to perform step 308 until the control node verifies the motion model obtained through training successfully.

Because the at least one terminal corresponding to the plurality of samples meets a target condition, the motion model trained by the control node based on the plurality of samples corresponds to at least one of a terminal type, a radio frequency band, and a test mode that corresponds to the target condition. For example, if the target condition is shown in the foregoing Case 1, the motion model corresponds to one of the terminal type of the at least one terminal, the radio frequency band used by the at least one terminal, or the measurement mode supported by the at least one terminal. If the target condition is shown in the foregoing Case 2, the motion model corresponds to the radio frequency band used by the at least one terminal or the measurement mode supported by the at least one terminal. If the target condition is shown in the foregoing Case 3, the motion model corresponds to the terminal type and the radio frequency band used by the at least one terminal, or the measurement mode supported by the at least one terminal.

After the control node obtains the motion model, the control node associates and stores the motion model with at least one of a corresponding terminal type, a corresponding radio frequency band, and a corresponding measurement mode for subsequent query.

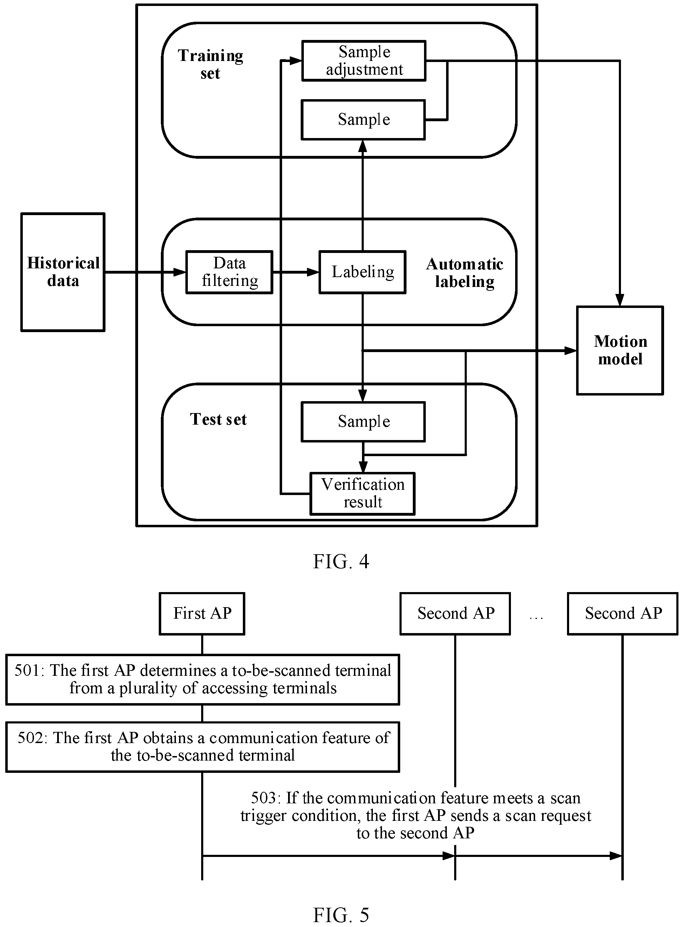

To further describe the foregoing training process, refer to a schematic diagram of a motion model training process according to an embodiment of this application shown in FIG. 4. In FIG. 4, the control node obtains historical data (that is, a second time sequence of at least one terminal in 303) from each AP, and the control node performs step 306 based on the obtained historical data, to implement data filtering. The control node performs step 307 on filtered data, to implement labeling, and obtain a plurality of samples. The control node groups the plurality of samples into the training set and the test set. The control node performs step 308 based on the sample in the training set, to train the motion model. If the motion model cannot be obtained through training, a person skilled in the art adjusts the status attribute of the network environment status in the sample, and the control node performs step 308 again based on the adjusted sample, until the motion model is obtained through training. The control node verifies the motion model obtained through training based on the sample in the test set, to obtain a verification result. If the verification result is that verification performed on the training model fails, the person skilled in the art continues to adjust the status attribute of the network environment status in the sample, and the control node performs step 308 again based on the adjusted sample, until verification performed by the test set on the motion model obtained through training may succeed.

309: The control node sends the motion model to the plurality of APs.

When the control node sends the motion model to the plurality of APs, the control node also sends at least one of an identifier of a terminal type, a radio frequency band, and a mode identifier of a measurement mode corresponding to the motion model to the plurality of APs.

310: For a first AP in the plurality of APs, the first AP receives the motion model, and associates and stores the motion model with at least one of a corresponding terminal type, a corresponding radio frequency band, and a corresponding measurement mode.

The first AP associates and stores the motion model with at least one of an identifier of a corresponding terminal type, a radio frequency band, and a mode identifier of a measurement mode.

According to the method provided in embodiments of this application, a control node performs model training based on a sample of at least one terminal, to obtain a motion model, and delivers the motion model to each AP, so that each AP subsequently outputs a motion feature of a to-be-scanned terminal based on the motion model, and each AP determines, based on the motion feature of the to-be-scanned terminal, whether to trigger a neighboring AP to scan the to-be-scanned terminal.

Each AP may collect, in real time, a communication feature of each terminal that accesses the AP, and determine, based on the collected communication feature, whether each terminal needs to be scanned. If yes, the AP notifies the neighboring AP to scan each terminal. For further description of the process, refer to a flowchart of a terminal scanning method according to an embodiment of this application shown in FIG. 5.

501: The first AP determines the to-be-scanned terminal from the plurality of accessing terminals.

The to-be-scanned terminal supports downlink signal quality measurement and roaming guidance.

For any terminal in the plurality of terminals, the first AP queries a terminal profile corresponding to a terminal type of the terminal from the plurality of stored terminal profiles, and determines, based on the found terminal profile, whether the terminal supports the downlink signal quality measurement. If the terminal supports the downlink signal quality measurement, it indicates that the terminal supports the first AP to scan the terminal. If the terminal supports the roaming guidance, it indicates that the first AP subsequently guides the terminal to roam to the neighboring AP, and before the first AP guides the terminal to roam to the neighboring AP, both the first AP and the neighboring AP need to scan the terminal. Therefore, if the terminal supports the downlink signal quality measurement and the roaming guidance, the first AP determines the terminal as the to-be-scanned terminal.

502: The first AP obtains a communication feature of the to-be-scanned terminal, where the to-be-scanned terminal is a terminal that accesses the first AP, and the communication feature indicates a communication status between the to-be-scanned terminal and the first AP.

The communication feature includes at least one of a signal strength feature, a traffic feature, and a motion feature of the to-be-scanned terminal. The signal strength feature of the to-be-scanned terminal indicates the signal strength between the to-be-scanned terminal and the first AP. The traffic feature indicates a traffic transmission rate between the first AP and the to-be-scanned terminal, and the traffic transmission rate may be a downlink traffic transmission rate or an uplink traffic transmission rate between the first AP and the to-be-scanned terminal. The motion feature indicates whether the to-be-scanned terminal is moving away from the first AP.

The first AP obtains the network environment status of the to-be-scanned terminal at a current time point, and obtains, from the obtained network environment status, the signal strength between the to-be-scanned terminal and the first AP as a feature value of the signal strength feature. For a process in which the first AP obtains the network environment status of the terminal, refer to step 301. Details are not described in embodiments of this application.

The first AP collects statistics on a quantity of downlink packets or a quantity of uplink packets transmitted between the first AP and the to-be-scanned terminal in a current detection periodicity. For any of the quantity of uplink packets or the quantity of downlink packets, the first AP determines, based on the quantity of packets and target duration of the detection periodicity, a traffic transmission rate between the first AP and the to-be-scanned terminal. The first AP determines the traffic transmission rate as a feature value of a traffic feature, where the traffic transmission rate is a ratio of the quantity of packets to the target duration. It should be noted that if the quantity of packets is the quantity of uplink packets, the traffic transmission rate is the uplink traffic transmission rate, or if the quantity of packets is the quantity of downlink packets, the traffic transmission rate is the downlink traffic transmission rate.

The first AP obtains the first time sequence of the to-be-scanned terminal, and determines, based on the first time sequence of the to-be-scanned terminal, the motion feature of the to-be-scanned terminal. The first time sequence includes the network environment statuses of the to-be-scanned terminal at the plurality of time points, the first time sequence corresponds to the current time period, and the plurality of time points include the current time point and at least one time point before the current time point that are consecutive with the current time point in terms of time. The current time period includes the plurality of time points.

The process in which the first AP obtains the first time sequence of the to-be-scanned terminal is similar to the process in which the first AP obtains the second time sequence of the terminal in step 301. Details are not described herein again in this embodiment of this application. A difference lies in that duration of the first time sequence is less than duration of the second time sequence.

In a possible implementation, the first AP queries the motion model corresponding to the to-be-scanned terminal. After the corresponding motion model is found, the first AP inputs the first time sequence into the found motion model, the motion model outputs, based on the input first time sequence, the target label of the first time sequence. The first AP determines the motion feature of the to-be-scanned terminal based on the target label of the first time sequence. In a possible implementation, if the target label is a first label, the first AP determines that the motion feature is the static motion feature. If the target label is a second label, the first AP determines that the motion feature is the approaching motion feature. If the target label is a third label, the first AP determines that the motion feature is the receding motion feature. If the target label is the non-receding label, the first AP determines that the motion feature is the approaching motion feature and the static motion feature.

A process in which the first AP queries the motion model corresponding to the to-be-scanned terminal includes: The first AP queries, based on at least one of the terminal type of the terminal, the radio frequency band used by the terminal, and the measurement mode supported by the terminal, the corresponding motion model from the plurality of stored plurality of motion models. If the target condition is shown in Case 1, the first AP queries, from the plurality of motion models, a motion model corresponding to any one of a terminal type of the to-be-scanned terminal, a radio frequency band used by the to-be-scanned terminal, or a measurement mode supported by the to-be-scanned terminal. In this case, the to-be-scanned terminal and the at least one terminal used to train the motion model meet the target condition. If the target condition is shown in Case 2, the first AP queries, from the plurality of motion models, a motion model corresponding to a radio frequency band used by the to-be-scanned terminal or a measurement mode supported by the to-be-scanned terminal. In this case, the to-be-scanned terminal and the at least one terminal used to train the motion model meet the target condition. If the target condition is shown in Case 3, the first AP queries, from the plurality of motion models, the motion model corresponding to the terminal type of the to-be-scanned terminal, the radio frequency band used by the to-be-scanned terminal, or the measurement mode supported by the to-be-scanned terminal. In this case, the to-be-scanned terminal and the at least one terminal used to train the motion model meet the target condition.

503: If the communication feature meets the scan trigger condition, the first AP sends a scan request to a second AP, where the scan request indicates to scan the to-be-scanned terminal.

The second AP is the neighboring AP of the first AP. The scan trigger condition includes at least one of the following: a feature value of the signal strength feature is less than a signal strength threshold; a feature value of the traffic feature is greater than a traffic transmission rate threshold; and the motion feature indicates that the to-be-scanned terminal is moving away from the first AP. The signal strength threshold and the traffic transmission rate threshold may be delivered by the control node, or may be configured by a person skilled in the art.

Before performing step 503, the first AP first determines whether the communication feature meets the scan trigger condition. If the communication feature meets the scan trigger condition, the first AP sends a scan request to the second AP to avoid missing an optimal occasion for guiding the to-be-scanned terminal to roam, so that the second AP coordinates, based on the scan request, the first AP to perform collaborative scanning on the to-be-scanned terminal.

In a possible implementation, when the scan trigger condition includes only any one of the foregoing three conditions, if the communication feature meets the any condition, the first AP determines that the communication feature meets the scan trigger condition. When the scan trigger condition includes a plurality of the foregoing three conditions, if the communication feature meets at least one of the plurality of conditions, the first AP determines that the communication feature meets the scan trigger condition.

An example in which the scan trigger condition includes only any one of the foregoing three conditions is used to describe step 503 as follows:
When the scan trigger condition includes only that the feature value of the signal strength feature is less than the signal strength threshold, if the signal strength that is between the to-be-scanned terminal and the first AP and that is obtained by the first AP is less than the signal strength threshold, it indicates that the to-be-scanned terminal may be moving away from the first AP. To ensure that the signal strength of the radio signal received by the to-be-scanned terminal no longer reduces, the first AP subsequently needs to guide the to-be-scanned terminal to roam to the neighboring AP. Before guiding the to-be-scanned terminal to roam, the first AP and the second AP need to perform collaborative scanning on the to-be-scanned terminal. To avoid missing the optimal occasion for guiding the to-be-scanned terminal to roam, if the signal strength that is between the to-be-scanned terminal and the first AP and that is obtained by the first AP is less than the signal strength threshold, the communication feature meets the scan trigger condition, and the first AP sends a scan request to the second AP, to indicate the second AP to scan the to-be-scanned terminal.

When the scan trigger condition includes only that the feature value of the traffic feature is greater than the traffic transmission rate threshold, if the feature value of the traffic feature of the to-be-scanned terminal that is calculated by the first AP is greater than the traffic transmission rate threshold, it indicates that the to-be-scanned terminal is performing a terminal service in a current collection periodicity, and the terminal service requires a large amount of network traffic to be normally performed. To ensure normal running of the terminal service, the first AP may subsequently guide the to-be-scanned terminal to roam to the neighboring AP. To avoid missing the optimal occasion for guiding the to-be-scanned terminal to roam, if the feature value of the traffic feature of the to-be-scanned terminal that is calculated by the first AP is greater than the traffic transmission rate threshold, the communication feature meets the scan trigger condition, and the first AP sends the scan request to the second AP, to indicate the second AP to scan the to-be-scanned terminal.

When the scan trigger condition includes only the motion feature that indicates that the to-be-scanned terminal is moving away from the first AP, to avoid missing the optimal occasion for guiding the to-be-scanned terminal to roam, if the motion feature of the to-be-scanned terminal is the receding motion feature, it indicates that the to-be-scanned terminal is moving away from the first AP. The communication feature meets the scan trigger condition, and the first AP sends the scan request to the second AP, to indicate the second AP to scan the to-be-scanned terminal.

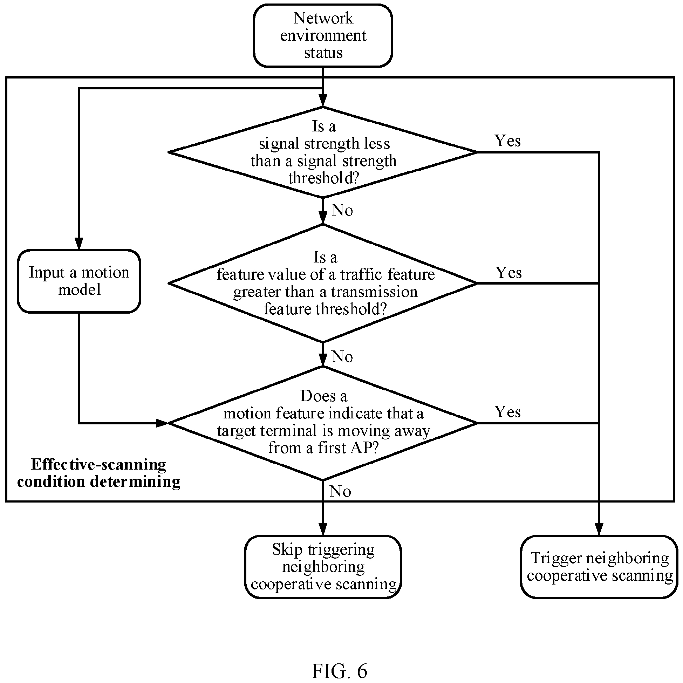

In some embodiments, in a case that the scan trigger condition includes the foregoing three items, and the communication feature meets the scan trigger condition provided that any one of the communication feature is met, step 503 is described as follows:
After the first AP obtains the network environment status of the to-be-scanned terminal at the current time point, if the signal strength between the to-be-scanned terminal and the first AP in the network environment status is less than the signal strength threshold, the first AP sends the scan request to the second AP, to trigger the second AP to perform collaborative scanning on the to-be-scanned terminal. If the signal strength between the to-be-scanned terminal and the first AP is greater than or equal to the signal strength threshold, the first AP skips triggering the second AP to perform collaborative scanning on the to-be-scanned terminal, and obtains the feature value of the traffic feature of the to-be-scanned terminal. If the feature value of the traffic feature is greater than the traffic transmission rate threshold, the first AP sends the scan request to the second AP, to trigger the second AP to perform collaborative scanning on the to-be-scanned terminal. If the feature value of the traffic feature is less than or equal to the traffic transmission rate threshold, the first AP skips triggering the second AP to perform collaborative scanning on the to-be-scanned terminal, and inputs the first time sequence into the motion model, to determine the motion feature of the to-be-scanned terminal based on a target label output by the motion model. If the motion feature indicates that the to-be-scanned terminal is moving away from the first AP, the first AP sends the scan request to the second AP, to trigger the second AP to perform collaborative scanning on the to-be-scanned terminal. If the motion feature cannot indicate that the to-be-scanned terminal is moving away from the first AP, the first AP does not trigger the second AP to perform collaborative scanning on the to-be-scanned terminal, re-obtains, at a next time point, a network environment status of the to-be-scanned terminal at the next time point, and performs the foregoing determining process of a next round. For example, FIG. 6 is a flowchart of triggering collaborative scanning according to an embodiment of this application.

According to the method provided in embodiments of this application, an AP determines, based on communication feature information of a to-be-scanned terminal that accesses the AP, whether a neighboring AP needs to scan the terminal, and if yes, the AP notifies the neighboring AP to scan the terminal. This reduces a quantity of times that the neighboring AP scans the terminal, and reduces calculation overheads of the neighboring AP.

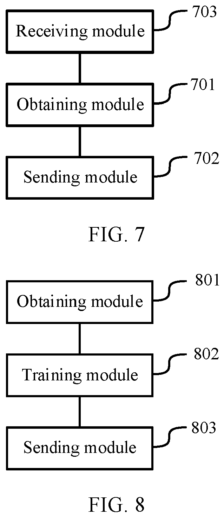

FIG. 7 is a schematic diagram of a structure of a terminal scanning apparatus according to an embodiment of this application. The apparatus 700 is configured as a first AP, and the apparatus 700 includes:
an obtaining module 701, configured to obtain a communication feature of a to-be-scanned terminal, where the to-be-scanned terminal is a terminal that accesses the first AP, and the communication feature indicates a communication status between the to-be-scanned terminal and the first AP; and
a sending module 702, configured to send a scan request to a second AP if the communication feature meets a scan trigger condition, where the second AP is a neighboring AP of the first AP, and the scan request indicates the second AP to scan the to-be-scanned terminal.

In a possible implementation, the communication feature includes at least one of a signal strength feature, a traffic feature, and a motion feature of the to-be-scanned terminal, the traffic feature indicates a traffic transmission rate between the first AP and the to-be-scanned terminal, and the motion feature indicates whether the to-be-scanned terminal is moving away from the first AP.

In a possible implementation, the scan trigger condition includes at least one of the following:
a feature value of the signal strength feature is less than a signal strength threshold;
a feature value of the traffic feature is greater than a traffic transmission rate threshold; and
the motion feature indicates that the to-be-scanned terminal is moving away from the first AP.

In a possible implementation, the communication feature includes a motion feature of the to-be-scanned terminal, and the motion feature indicates whether the to-be-scanned terminal is moving away from the first AP; and
the obtaining module 701 includes:
a determining unit, configured to determine the motion feature based on a first time sequence of the to-be-scanned terminal, where the first time sequence includes network environment statuses of the to-be-scanned terminal at a plurality of time points, and the network environment status indicates a network environment that is of the to-be-scanned terminal and that corresponds to the first AP.

In a possible implementation, the determining unit is configured to:
input the first time sequence into a motion model, and output the motion feature by using the motion model based on the input first time sequence.

In a possible implementation, the network environment status includes a network status of the to-be-scanned terminal.

In a possible implementation, the network environment status further includes a working status of the first AP.

In a possible implementation, the network status includes at least one of a signal strength between the to-be-scanned terminal and the first AP or a radio frequency band used by the to-be-scanned terminal.

In a possible implementation, the working status includes at least one of a channel identifier, a channel bandwidth, channel utilization, a quantity of accessing terminals, and transmit power of the first AP.

In a possible implementation, the apparatus further includes:
a receiving module 703, configured to receive the motion model from a control node.

In a possible implementation, the sending module 702 is further configured to:
send a second time sequence of at least one terminal to the control node, where the second time sequence of the at least one terminal is used to obtain the motion model through training, a second time sequence of one terminal includes network environment statuses of the terminal at a plurality of time points, and the network environment status indicates a network environment that is of the terminal and that corresponds to the first AP.

In a possible implementation, the to-be-scanned terminal and the at least one terminal meet at least one of the following:
a terminal type of the to-be-scanned terminal is the same as a terminal type of the at least one terminal;
the radio frequency band used by the to-be-scanned terminal is the same as a radio frequency band used by the at least one terminal; and
a signal strength measurement mode supported by the to-be-scanned terminal is the same as a signal strength measurement mode supported by the at least one terminal.

In a possible implementation, the to-be-scanned terminal supports downlink signal quality measurement and roaming guidance.

FIG. 8 is a schematic diagram of a structure of a terminal scanning apparatus according to an embodiment of this application. The apparatus 800 is configured as a control node, and the apparatus 800 includes:
an obtaining module 801, configured to obtain a sample of at least one terminal, where one sample of one terminal includes a third time sequence of the terminal and a label of the third time sequence, the third time sequence includes network environment statuses of the terminal at a plurality of time points, the network environment status indicates a network environment that is of the terminal and that corresponds to an AP accessed by the terminal, and the label indicates a motion feature of the terminal reflected in the third time sequence; and
a training module 802, configured to perform model training based on the sample of the at least one terminal, to obtain a motion model, where the motion model is used to output a motion feature of a to-be-scanned terminal, to determine whether to scan the to-be-scanned terminal.

In a possible implementation, the obtaining module 801 is configured to:
for any terminal in the at least one terminal, obtain at least one second time sequence of the terminal, where one second time sequence includes network environment statuses of the terminal at a plurality of time points, and the network environment statuses in the second time sequence correspond to a same AP; and
for any second time sequence in the at least one second time sequence, obtain a sample of the terminal based on the second time sequence.

In a possible implementation, the obtaining module 801 includes:
a first obtaining unit, configured to obtain, for any terminal in the at least one terminal, at least one second time sequence of the terminal, where one second time sequence includes network environment statuses of the terminal at a plurality of time points, and the network environment statuses in the second time sequence correspond to a same AP; and
a second obtaining unit, configured to obtain, for any second time sequence in the at least one second time sequence, a sample of the terminal based on the second time sequence.

In a possible implementation, the second obtaining unit includes:
an obtaining subunit, configured to obtain at least one third time sequence of the terminal based on the second time sequence, where the at least one third time sequence belongs to the second time sequence; and
a determining subunit, configured to determine a label of the third time sequence for any third time sequence in the at least one third time sequence.

In a possible implementation, the obtaining subunit is configured to:
for any period of time sequence in the any second time sequence, determine the any period of time sequence as one third time sequence if duration of the period of time sequence is greater than first duration, and a signal strength fluctuation value of the period of time sequence is less than a first fluctuation threshold, where the signal strength fluctuation value indicates a fluctuation status that is of a signal strength between the terminal and an AP accessed by the terminal and that is in a time period corresponding to the period of time sequence; and
divide the period of time sequence into a plurality of third time sequences of the terminal if the duration is less than second duration and the signal strength fluctuation value is greater than a second fluctuation threshold.

In a possible implementation, the determining subunit is configured to:
if duration of the third time sequence is greater than the first duration, and a signal strength fluctuation value of the third time sequence is less than the first fluctuation threshold, determine the label of the third time sequence as a non-receding label, where the non-receding label indicates that the terminal is not moving away from the accessed AP, and the signal strength fluctuation value indicates a fluctuation status that is of a signal strength between the terminal and the AP accessed by the terminal and that is in a time period corresponding to the third time sequence.

In a possible implementation, the network environment status includes a signal strength between the terminal and an AP accessed by the terminal; and the determining subunit is configured to:
if the third time sequence is a partial time sequence in the period of time sequence, determine the label of the third time sequence based on a target network environment status in the period of time sequence, where the target network environment status is a network environment status to which a maximum signal strength in the period of time sequence belongs.

In a possible implementation, the determining subunit is configured to:
determine the label of the third time sequence as a non-receding label if the third time sequence in the period of time sequence is located before the target network environment status, where the non-receding label indicates that the terminal is not moving away from the accessed AP; or
determine the label of the third time sequence as a receding label if the third time sequence in the period of time sequence is located after the target network environment status, where the non-receding label indicates that the terminal is moving away from the accessed AP.

In a possible implementation, the determining subunit is configured to:
determine the label of the any third time sequence as the non-receding label or the receding label if the target network environment status is located in the any third time sequence.

In a possible implementation, the first obtaining unit is configured to:
receive, from any AP accessed by the terminal, one second time sequence of the terminal collected by the AP.

In a possible implementation, the to-be-scanned terminal and the at least one terminal meet at least one of the following:
a terminal type of the to-be-scanned terminal is the same as a terminal type of the at least one terminal;
the radio frequency band used by the to-be-scanned terminal is the same as a radio frequency band used by the at least one terminal; and
a signal strength measurement mode supported by the to-be-scanned terminal is the same as a signal strength measurement mode supported by the at least one terminal.

In a possible implementation, the apparatus further includes:

The sending module 803 is configured to send the motion model to at least one AP.

All of the foregoing technical solutions may form optional embodiments of this disclosure through any combination. Details are not described herein again.

It should be noted that when the terminal scanning apparatus provided in the foregoing embodiment determines whether to scan or train a motion model for a terminal, only division of the foregoing function modules is used as an example for description. In the practical application, the functions may be allocated to and completed by different function modules as required. That is, an internal structure of the apparatus is divided into different function modules, to complete all or some of the functions described above. In addition, the method embodiments for terminal scanning provided in the foregoing embodiments belong to a same concept. For a specific implementation process, refer to the method embodiments. Details are not described herein again.

Embodiments of this application further provide a computer program product or a computer program, where the computer program product or the computer program includes program code, and when the program code runs on an electronic device, the electronic device is enabled to perform the terminal scanning method.

A person of ordinary skill in the art may understand that all or some of the steps of the foregoing embodiments may be implemented by hardware, or may be implemented by a program instructing relevant hardware. The program may be stored in a computer-readable storage medium. The storage medium may be a read-only memory, a magnetic disk, an optical disc, or the like.

The foregoing descriptions are merely optional embodiments of this application, but are not intended to limit this application. Any modification, equivalent replacement, or improvement made without departing from the spirit and principle of this application should fall within the protection scope of this application.

## Claims

1. A terminal scanning method, performed by a first access point AP, wherein the method comprises:
obtaining a communication feature of a to-be-scanned terminal, wherein the to-be-scanned terminal is a terminal that accesses the first AP, and the communication feature indicates a communication status between the to-be-scanned terminal and the first AP; and
sending a scan request to a second AP if the communication feature meets a scan trigger condition, wherein the second AP is a neighboring AP of the first AP, and the scan request indicates the second AP to scan the to-be-scanned terminal.

2. The method according to claim 1, wherein the communication feature comprises at least one of a signal strength feature, a traffic feature, and a motion feature of the to-be-scanned terminal, the traffic feature indicates a traffic transmission rate between the first AP and the to-be-scanned terminal, and the motion feature indicates whether the to-be-scanned terminal is moving away from the first AP.

3. The method according to claim 2, wherein the scan trigger condition comprises at least one of the following:
a feature value of the signal strength feature is less than a signal strength threshold;
a feature value of the traffic feature is greater than a traffic transmission rate threshold; and
the motion feature indicates that the to-be-scanned terminal is moving away from the first AP.

4. The method according to any one of claims 1 to 3, wherein the communication feature comprises the motion feature of the to-be-scanned terminal, and the motion feature indicates whether the to-be-scanned terminal is moving away from the first AP; and
the obtaining a communication feature of a to-be-scanned terminal comprises:
determining the motion feature based on a first time sequence of the to-be-scanned terminal, wherein the first time sequence comprises network environment statuses of the to-be-scanned terminal at a plurality of time points, and the network environment status indicates a network environment that is of the to-be-scanned terminal and that corresponds to the first AP.

5. The method according to claim 4, wherein the determining the motion feature based on a first time sequence of the to-be-scanned terminal comprises:
inputting the first time sequence into a motion model, and outputting the motion feature by using the motion model based on the input first time sequence.

6. The method according to claim 4 or 5, wherein the network environment status comprises a network status of the to-be-scanned terminal.

7. The method according to claim 6, wherein the network environment status further comprises a working status of the first AP.

8. The method according to claim 6 or 7, wherein the network status comprises at least one of a signal strength between the to-be-scanned terminal and the first AP and a radio frequency band used by the to-be-scanned terminal.

9. The method according to claim 7, wherein the working status comprises at least one of a channel identifier, a channel bandwidth, channel utilization, a quantity of accessing terminals, and transmit power of the first AP.

10. The method according to any one of claims 5 to 9, wherein before the inputting the first time sequence into a motion model, the method further comprises:
receiving the motion model from a control node.

11. The method according to claim 10, wherein before the receiving the motion model from a control node, the method further comprises:
sending a second time sequence of at least one terminal to the control node, wherein the second time sequence of the at least one terminal is used to obtain the motion model through training, a second time sequence of one terminal comprises network environment statuses of the terminal at a plurality of time points, and the network environment status indicates a network environment that is of the terminal and that corresponds to the first AP.

12. The method according to claim 11, wherein the to-be-scanned terminal and the at least one terminal meet at least one of the following:
a terminal type of the to-be-scanned terminal is the same as a terminal type of the at least one terminal;
the radio frequency band used by the to-be-scanned terminal is the same as a radio frequency band used by the at least one terminal; and
a signal strength measurement mode supported by the to-be-scanned terminal is the same as a signal strength measurement mode supported by the at least one terminal.

13. The method according to any one of claims 1 to 12, wherein the to-be-scanned terminal supports downlink signal quality measurement and roaming guidance.

14. A terminal scanning method, performed by a control node, wherein the method comprises:
obtaining a sample of at least one terminal, wherein one sample of one terminal comprises a third time sequence of the terminal and a label of the third time sequence, the third time sequence comprises network environment statuses of the terminal at a plurality of time points, the network environment status indicates a network environment that is of the terminal and that corresponds to an AP accessed by the terminal, and the label indicates a motion feature of the terminal reflected in the third time sequence; and
performing model training based on the sample of the at least one terminal, to obtain a motion model, wherein the motion model is used to output a motion feature of a to-be-scanned terminal, to determine whether to scan the to-be-scanned terminal.

15. The method according to claim 14, wherein the obtaining a sample of at least one terminal comprises:
for any terminal in the at least one terminal, obtaining at least one second time sequence of the terminal, wherein one second time sequence comprises network environment statuses of the terminal at a plurality of time points, and the network environment statuses in the second time sequence correspond to a same AP; and
for any second time sequence in the at least one second time sequence, obtaining a sample of the terminal based on the second time sequence.

16. The method according to claim 15, wherein the obtaining a sample of the terminal based on the second time sequence comprises:
obtaining at least one third time sequence of the terminal based on the second time sequence, wherein the at least one third time sequence belongs to the second time sequence; and
for any third time sequence in the at least one third time sequence, determining a label of the third time sequence.

17. The method according to claim 16, wherein the obtaining at least one third time sequence of the terminal based on the second time sequence comprises:
for any period of time sequence in the second time sequence, determining the period of time sequence as one third time sequence if duration of the period of time sequence is greater than first duration and a signal strength fluctuation value of the period of time sequence is less than a first fluctuation threshold, wherein the signal strength fluctuation value indicates a fluctuation status that is of a signal strength between the terminal and an AP accessed by the terminal and that is in a time period corresponding to the period of time sequence; and
dividing the period of time sequence into a plurality of third time sequences of the terminal if the duration is less than second duration and the signal strength fluctuation value is greater than a second fluctuation threshold.

18. The method according to claim 17, wherein the determining a label of the third time sequence comprises:
if duration of the third time sequence is greater than the first duration, and a signal strength fluctuation value of the third time sequence is less than the first fluctuation threshold, determining the label of the third time sequence as a non-receding label, wherein the non-receding label indicates that the terminal is not moving away from the accessed AP, and the signal strength fluctuation value indicates a fluctuation status that is of a signal strength between the terminal and the AP accessed by the terminal and that is in a time period corresponding to the third time sequence.

19. The method according to claim 17, wherein the network environment status comprises a signal strength between the terminal and an AP accessed by the terminal; and
the determining a label of the third time sequence comprises:
if the third time sequence is a partial time sequence in the period of time sequence, determining the label of the third time sequence based on a target network environment status in the period of time sequence, wherein the target network environment status is a network environment status to which a maximum signal strength in the period of time sequence belongs.

20. The method according to claim 19, wherein the determining the label of the third time sequence based on a target network environment status in the period of time sequence comprises:
determining the label of the third time sequence as a non-receding label if the third time sequence in the period of time sequence is located before the target network environment status, wherein the non-receding label indicates that the terminal is not moving away from the accessed AP; or
determining the label of the third time sequence as a receding label if the third time sequence in the period of time sequence is located after the target network environment status, wherein the non-receding label indicates that the terminal is moving away from the accessed AP.

21. The method according to any one of claims 14 to 20, wherein the obtaining at least one second time sequence of the terminal comprises:
receiving, from any AP accessed by the terminal, one second time sequence of the terminal collected by the AP.

22. The method according to any one of claims 13 to 21, wherein the to-be-scanned terminal and the at least one terminal meet at least one of the following:
a terminal type of the to-be-scanned terminal is the same as a terminal type of the at least one terminal;
the radio frequency band used by the to-be-scanned terminal is the same as a radio frequency band used by the at least one terminal; and
a signal strength measurement mode supported by the to-be-scanned terminal is the same as a signal strength measurement mode supported by the at least one terminal.

23. A terminal scanning system, wherein the system comprises a plurality of APs; and a first AP in the plurality of APs is configured to:
obtain a communication feature of a to-be-scanned terminal, wherein the to-be-scanned terminal is a terminal that accesses the first AP, and the communication feature indicates a communication status between the to-be-scanned terminal and the first AP; and
send a scan request to a second AP in the plurality of APs if the communication feature meets a scan trigger condition, wherein the second AP is a neighboring AP of the first AP, and the scan request indicates the second AP to scan the to-be-scanned terminal.

24. The system according to claim 23, wherein the communication feature comprises a motion feature of the to-be-scanned terminal, and the motion feature indicates whether the to-be-scanned terminal is moving away from the first AP;
the system further comprises a control node, and the control node is configured to:
obtain a sample of at least one terminal from the plurality of APs, wherein one sample of one terminal comprises a third time sequence of the terminal and a label of the third time sequence, the third time sequence comprises network environment statuses of the terminal at a plurality of time points, the network environment status indicates a network environment that is of the terminal and that corresponds to an AP accessed by the terminal, and the label indicates a motion feature of the terminal reflected in the third time sequence;
perform model training based on the sample of the at least one terminal, to obtain a motion model, wherein the motion model is used to output the motion feature of the to-be-scanned terminal, to determine whether to scan the to-be-scanned terminal; and
send the motion model to the plurality of APs; and
the first AP is further configured to:
input a first time sequence of the to-be-scanned terminal into the motion model, and output the motion feature by using the motion model based on the input first time sequence, wherein the first time sequence comprises network environment statuses of the to-be-scanned terminal at a plurality of time points, and the network environment status indicates a network environment that is of the to-be-scanned terminal and that corresponds to the first AP.

25. A terminal scanning apparatus, wherein the apparatus is configured as a first AP, and the apparatus comprises:
an obtaining module, configured to obtain a communication feature of a to-be-scanned terminal, wherein the to-be-scanned terminal is a terminal that accesses the first AP, and the communication feature indicates a communication status between the to-be-scanned terminal and the first AP; and
a sending module, configured to send a scan request to a second AP if the communication feature meets a scan trigger condition, wherein the scan request indicates to scan the to-be-scanned terminal, the second AP is a neighboring AP of the first AP, and the scan request indicates the second AP to scan the to-be-scanned terminal.

26. The apparatus according to claim 25, wherein the communication feature comprises at least one of a signal strength feature, a traffic feature, and a motion feature of the to-be-scanned terminal, the traffic feature indicates a traffic transmission rate between the first AP and the to-be-scanned terminal, and the motion feature indicates whether the to-be-scanned terminal is moving away from the first AP.

27. A terminal scanning apparatus, wherein the apparatus is configured as a control node, and the apparatus comprises:
an obtaining module, configured to obtain a sample of at least one terminal, wherein one sample of one terminal comprises a third time sequence of the terminal and a label of the third time sequence, the third time sequence comprises network environment statuses of the terminal at a plurality of time points, the network environment status indicates a network environment that is of the terminal and that corresponds to an AP accessed by the terminal, and the label indicates a motion feature of the terminal reflected in the third time sequence; and
a training module, configured to perform model training based on the sample of the at least one terminal, to obtain a motion model, wherein the motion model is used to output a motion feature of a to-be-scanned terminal, to determine whether to scan the to-be-scanned terminal.

28. The apparatus according to claim 27, wherein the obtaining module is configured to:
for any terminal in the at least one terminal, obtain at least one second time sequence of the terminal, wherein one second time sequence comprises network environment statuses of the any terminal at a plurality of time points, and the network environment statuses in the second time sequence correspond to a same AP; and
for any second time sequence in the at least one second time sequence, obtain a sample of the terminal based on the second time sequence.

29. An electronic device, wherein the electronic device comprises a processor and a memory, the memory stores program code, and the program code is loaded and executed by the processor, so that the electronic device implements the terminal scanning method according to any one of claims 1 to 22.

30. A computer-readable storage medium, wherein the computer-readable storage medium stores program code, and when the program code runs on a computer, the computer is enabled to perform the terminal scanning method according to any one of claims 1 to 22.
